# FASCICULE DE BREVET EUROPEEN

(11) **EP 2 670 563 B1**
(45) Date de publication et mention de la délivrance du brevet: **20.11.2019**
(21) Numéro de dépôt: 12706650.4
(22) Date de dépôt: 30.01.2012
(51) Int. Cl.: B23P 6/00, B32B 43/00, B64F 5/00, B23K 9/16

(54) **DISPOSITIF DE PROTECTION GAZEUSE**
GASABSCHIRMUNGSVORRICHTUNG
GAS SHIELDING DEVICE

(30) Priorité: 31.01.2011 FR 1150705
(43) Date de publication de la demande: 11.12.2013
(73) Titulaire: Safran Nacelles, 76700 Gonfreville-l'Orcher (FR)
(72) Inventeur: COMON, Pierre, F-76600 Le Havre (FR); HERVE, Nicolas, F-76170 La Frenaye (FR); RIVOAL, Jean-Claude, F-76210 Gruchet-la-Valasse (FR)
(74) Mandataire: Delorme, Nicolas
(86) Numéro de dépôt international: PCT/FR2012/050192
(87) Numéro de publication internationale: WO 2012/104532

(56) Documents cités:
- JP-A- 7 172 304
- JP-A- 61 289 971
- US-A- 2 856 510
- US-A- 3 125 666
- US-A- 5 003 150
- US-A- 5 388 753
- US-A- 5 393 949
- US-A- 5 980 174
- US-A1- 2006 076 320

## Description

La présente invention se rapporte à un dispositif de mise en œuvre d'un procédé de fabrication d'un panneau d'atténuation acoustique notamment pour l'aéronautique.

L'utilisation de panneaux d'atténuation acoustique, par exemple dans les nacelles de moteurs d'aéronefs et des éléments de nacelle équipés d'un tel panneau pour réduire les émissions de bruit des turboréacteurs, est connue de l'état de la technique.

Ces panneaux d'atténuation acoustique présentent en général une structure sandwich comprenant une peau structurante, une structure alvéolaire du type nid d'abeille, et une couche résistive généralement formée par une peau acoustique perforée.

Dans certains cas, les panneaux d'atténuation acoustique doivent être conçus pour être installés en zone chaude de nacelle de turboréacteur d'aéronef, et notamment dans la partie aval de cette nacelle par laquelle sont expulsés des gaz d'échappement dont la température est typiquement supérieure à 600 °C.

L'utilisation de panneaux d'atténuation acoustique dans cette zone d'échappement permet de réduire sensiblement les émissions sonores situées dans la plage des hautes fréquences.

Pour ces applications particulières à haute température, on utilise en général des panneaux d'atténuation acoustique dont la peau structurante est formée par une tôle métallique, la structure alvéolaire est métallique, et la couche résistive est une tôle métallique perforée.

La structure alvéolaire métallique est alors reliée par brasage (c'est-à-dire par assemblage de deux matériaux à l'aide d'un métal d'apport ayant une température de fusion inférieure à celle du métal de base) à la tôle métallique structurante et à la tôle métallique perforée.

L'utilisation d'alliages métalliques pour l'ensemble des éléments formant cette structure sandwich, et la mise en œuvre d'un brasage pour les relier entre eux, sont particulièrement coûteuses.

Or, de telles pièces sont souvent fabriquées à partir de métaux ou d'alliages relativement chers, développés pour résister aux environnements à hautes températures tout en maintenant des propriétés nécessaires de résistance.

Leur réalisation est, par conséquent, relativement coûteuse.

Ainsi, lorsqu'un de ces panneaux est endommagé soit pendant son assemblage soit en raison d'états de service par la fatigue thermique, la corrosion, l'érosion ou encore par collision avec d'autres objets, il est souhaitable de le réparer pour éviter les dépenses d'une nouvelle pièce.

Une autre détérioration possible d'un tel panneau qu'il convient de réparer est la détérioration des interfaces de jonction entre la peau structurante, la couche résistive et la structure en nid d'abeille affectant les qualités structurales du panneau.

Or, les opérations d'assemblage ou de réparation de ces détériorations telles que le soudage ou le brasage sont complexes dans la mesure où l'une des peaux du panneau acoustique présente des orifices de taille réduite et l'autre est pleine

On connait ainsi des procédés de réparation dans lesquels on remplace tout ou en partie une peau du panneau acoustique et /ou de la structure en nid d'abeille.

Or, de tels procédés sont coûteux.

Par ailleurs, les opérations d'assemblage ou de réparation associées sont délicates dans la mesure où il existe un risque que les qualités acoustiques et structurales du panneau soient affectées par ces opérations telle qu'une, affectation de la tenue mécanique du panneau sandwich voire une perte d'absorption acoustique du panneau.

Par ailleurs, les opérations d'assemblage ou de réparation telles que le soudage ou le brasage affecte les propriétés métallurgiques du panneau traité et ont une incidence sur les propriétés de surface de ce dernier.

Des défauts comme l'oxydation ou l'apparition de criques peuvent ainsi résulter des opérations de réparation.

Or ces défauts lorsqu'ils se trouvent au sein des panneaux sont délicats à éliminer.

Le document US 2006/0076320 A1 décrit une technique de soudage mettant en oeuvre une torche de soudage. Il décrit un dispositif selon le préambule de la revendication 1.

Un but de la présente invention est de remédier aux inconvénients mentionnés.

Le présent document a pour but de fournir un procédé de réparation d'un panneau d'atténuation acoustique adapté pour être installé en zone chaude qui élimine les risques de séparation des peaux du panneau relativement à la structure en nid d'abeille de ce dernier.

Un autre but du présent document est de proposer un procédé de réparation d'un panneau d'atténuation acoustique adapté pour être installé en zone chaude dans lequel la protection contre la contamination du panneau traité est optimale.

Il est ainsi désirable de proposer un procédé de réparation d'un panneau d'atténuation acoustique adapté pour être installé en zone chaude qui réduit les risques d'apparition de défauts de surface sur le panneau.

Un autre but du présent document est de proposer un procédé de réparation d'un panneau d'atténuation acoustique adapté pour être installé en zone chaude qui répond aux exigences relatives à la conservation des qualités acoustiques et structurales du panneau réparé.

Un autre but du présent document est de proposer un procédé de réparation d'un panneau d'atténuation acoustique adapté pour être installé en zone chaude à moindre cout et de mise en œuvre simple.

Un autre but du présent document est de proposer une solution alternative aux dispositifs de protection gazeuse permettant de mettre en œuvre les procédés de réparation précités.

La présente invention a ainsi notamment pour but de proposer une solution alternative aux dispositifs de protection gazeuse permettant une diffusion laminaires du gaz de protection sur les pièces à souder.

A cet effet, le présent document propose un procédé de réparation d'un panneau d'atténuation acoustique comprenant une peau structurante en matériau métallique, une couche résistive en matériau métallique et une structure alvéolaire comme matériau d'absorption acoustique directement rapportée sur la peau structurante et la couche résistive remarquable en ce qu'il comprend au moins une étape dans laquelle on insère au moins une broche de renforcement dans l'épaisseur dudit panneau et on fixe ladite broche respectivement sur la peau structurante et la couche résistive.

Suivant d'autres caractéristiques optionnelles de ce procédé :
- on fixe ladite broche successivement sur la couche résistive et sur la peau structurante du panneau ;
- on insère la broche de renforcement transversalement à la structure alvéolaire et orientée de façon perpendiculaire par rapport aux plans de la couche résistive et de la peau structurante du panneau ;
- l'étape de fixation de la broche de renforcement est une étape de soudage sous atmosphère contrôlée au droit et à l'envers des surfaces soudées ;
- dans l'étape de soudage de la broche de renforcement sur la couche résistive, on place un dispositif de diffusion de gaz inerte sur la couche résistive autre qu'une torche de soudage et une buse d'éjection de gaz de l'autre côté du panneau sur la peau structurante ;
- on diffuse un gaz de type argon ou helium ou un mélange des deux ;
- préalablement à l'insertion de la broche de renforcement, on réalise des perforations sur la couche résistive et la peau structurante, ces perforations étant de forme et de dimensions complémentaires à celles de la broche de renforcement ;
- préalablement à l'insertion de la broche de renforcement et successivement à l'étape de perforation, on réalise une étape d'ébavurage sur les faces interne et externe de la couche résistive et de la peau structurante.

Le document propose également un panneau d'atténuation acoustique mis en œuvre par le procédé de réparation précité.

Il propose, en outre, une nacelle de moteur d'aéronef équipée d'au moins un panneau acoustique tel que précité.

La présente invention propose un dispositif de protection gazeuse mis en œuvre lors d'une étape de soudage sous atmosphère contrôlée d'un panneau d'atténuation acoustique selon la revendication 1.

Suivant d'autres caractéristiques optionnelles de ce dispositif selon l'invention :
- le dispositif est adapté pour coopérer avec la torche de soudage et permettre un soudage au droit et à l'envers des surfaces à souder du panneau ;
- le diffuseur est configuré pour assurer une arrivée non turbulente du gaz sur les surfaces à souder du panneau ;
- le diffuseur est adapté pour diffuser le gaz de façon indirect sur les surfaces à souder, l'anneau du diffuseur comprenant des orifices de sortie du gaz sur sa périphérie dirigés vers la concavité de l'enceinte.

D'autres caractéristiques et avantages de la présente invention apparaîtront à la lumière de la description qui va suivre, et à l'examen des figures ci-annexées, où :
- La figure 1 représente de manière schématique et en coupe, un mode de réalisation d'un panneau d'atténuation acoustique destiné à être réparé par un procédé selon un mode de réalisation non revendiqué de la présente demande ;
- Les figures 2 à 7 illustrent les différentes étapes consécutives du procédé de réparation du panneau d'atténuation acoustique de la figure 1 selon un mode de réalisation non revendiqué de la présente demande ;
- La figure 8 est une vue en perspective d'un dispositif de protection gazeuse de la présente invention mettant en œuvre une étape de soudage du procédé des figures 1 à 7 ;
- La figure 9 est une vue en perspective plongeante du dispositif de la figure 8.

Sur l'ensemble de ces figures, des références analogues ou identiques désignent des pièces identiques.

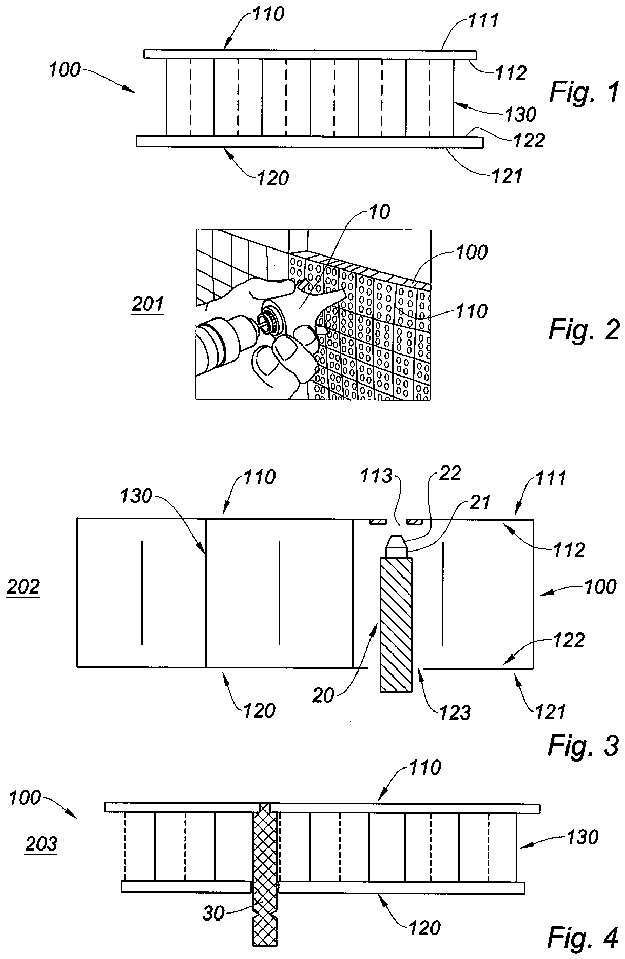

Comme on peut le voir sur la figure 1, un panneau d'atténuation acoustique 100 adapté pour être réparé par un procédé le présent document comporte, du côté opposé à l'origine de l'excitation sonore, une peau structurante 120, formée dans une tôle.

Sur cette peau structurante 120 est rapporté une structure alvéolaire 130 de type nid d'abeille comme matériau d'absorption acoustique, connu en soi.

Une couche résistive 110, formée par une tôle perforée ou par un grillage, ou encore par une combinaison de ces deux éléments, peut être rapportée sur la structure alvéolaire 130, de manière à l'encapsuler entre elle et la peau structurante 120.

Dans un exemple non limitatif, les performations sont inférieures à 1.5 mm de diamètre interne.

La structure alvéolaire 130 peut être fixée sur la peau structurante 120 et sur la couche résistive 110 par un procédé de brasage ou de soudage.

Ce panneau d'atténuation acoustique 100 est adapté pour être utilisé en zone de haute température, notamment sur une nacelle d'aéronef (notamment dans la zone d'expulsion des gaz d'échappement du turboréacteur).

Ainsi, comme indiqué précédemment, la peau structurante 120 et la couche résistive 110 peuvent être formées à partir de matériaux métalliques.

Ces matériaux pourront être choisis parmi les métaux et /ou des alliages métalliques comme le titane, l'inconel et toutes leurs nuances.

La structure alvéolaire 130 peut être formée, quant à elle, de matériaux métalliques, polymères, céramiques ou composites, disponibles sur le marché.

Dans le cas particulier où le panneau d'atténuation acoustique 100 est destiné à être installé dans des zones de haute température d'une nacelle d'aéronef, le matériau de la structure alvéolaire 130 peut résister à des températures pouvant aller jusqu'à 800°C.

Un tel panneau d'atténuation acoustique 100 endommagé pourra être réparé par un procédé 200 dont la mise en œuvre est réalisée de la façon suivante.

Ce panneau 100 peut être endommagé de façons diverses, à savoir, selon des exemples non limitatifs, par abrasion, érosion, impact ou encore corrosion.

Le procédé de réparation comprend une série d'étapes successives qui seront décrites en relation avec les figures 2 à 7.

Dans une étape 201 préalable du procédé de réparation illustrée sur la figure 2, on réalise des perforations 113 (visible sur la figure 3) sur la couche résistive 110 avec un outillage adapté.

La position de ces perforations 113 peut être déterminée en fonction des sections du panneau d'atténuation acoustique 100 qui sont endommagées.

Les positions de ces perforations 113 peuvent être, ainsi, dans des exemples, non limitatifs, déterminées après contrôle non destructif (type Taptest, Radiographie Rayon X, Contrôle Ultrasons, ....) permettant d'identifier les zones non brasées ou présentant un autre défaut.

A la suite de ce repérage, on dessine un schéma de ces perforations 113 suivant les entraxes validées par essais et calculs.

Elles sont ainsi réalisées au droit de ces sections dont les parties indésirables ont été éliminées par la perforation 113.

Dans une étape successive, on réalise des perforations 123 similaires (visible sur la figure 3) sur la peau structurante 120, au droit des perforations de la couche résistive 110.

Ces perforations ont des dimensions et, notamment, un diamètre plus important que celui des perforations 113 de la couche résistive 110.

Ce diamètre est fonction d'un outil d'ébavurage utilisé dans une étape ultérieure du procédé qui sera décrite en référence avec la figure 3.

Ainsi, le panneau d'atténuation acoustique 100 est percé de part et d'autre de la structure alvéolaire 130.

Pour réaliser ces perforations, une variante de réalisation prévoit un dispositif de perçage adapté comprenant au moins un foret dont la forme et les dimensions sont adaptées aux perforations 113,123 souhaitées.

Ce foret peut être associé à un support 10 assurant sa stabilité, à savoir un support 10 de type trépied comprenant un canon de perçage adapté.

Les perforations du panneau d'atténuation acoustique 100 étant réalisées, on supprime, dans une étape 202 suivante, tout surplus de matière présent sur la peau structurante 120 et la couche résistive 110 au droit des perforations 113,123 réalisées.

Ce surplus de matière peut correspondre, notamment, à des bavures liées au soudage ou brasage de la peau structurante 120 et de la couche résistive 110 avec la structure alvéolaire 130 mais également aux bavures liées aux perforations 113,123 tout juste réalisées.

Ainsi, dans cette étape, on réalise un ébavurage des faces interne 112 et externe 111 de la couche résistive 110 et de la face interne 122 de la peau structurante 120, de sorte d'obtenir un état de surface correct de la peau structurante 120 et de la couche résistive 110.

Cet ébavurage peut être réalisé par toute technique d'ébavurage connue.

Avantageusement, cet ébavurage permet d'éviter toute pollution lors de la soudure de broches de renforcement ultérieure: évitant ainsi, comme exemples non limitatifs, les inclusions, les manques de liaison, les porosités, les criques .

Dans une variante de réalisation préférée, il est réalisé par abrasion à l'aide d'un outil de forme adapté illustré sur la figure 3.

Cet outil prend la forme d'un alésoir 20 prolongée à son extrémité libre par un guide 21.

Ce guide 21 présente une extrémité 22 sous forme de cône tronqué de forme et de dimensions adaptés pour traverser les perforations réalisées dans la couche résistive 110.

Par ailleurs, l'alésoir 20 présente, lui-même, une forme et des dimensions identiques à celle de broches de raccordement destinées à être insérées dans l'épaisseur du panneau 100 au droit des perforations 113,123 comme on le verra plus loin en relation avec la figure 4.

A l'étape suivante 203, on insère des broches de renforcement 30 dans l'épaisseur du panneau d'atténuation acoustique 100, ces broches de renforcement 30 s'étendant au contact de la couche résistive 110 et la peau structurante 120 et, plus particulièrement, chaque broche de renforcement 30 venant s'insérer dans les espaces laissés libres par les perforations 113,123 de la couche résistive 110 et de la peau structurante 120.

Chacune d'elles présente, ainsi, une forme et des dimensions complémentaires à ces perforations 113,123.

Ces broches de renforcement sont destinées à renforcer les interfaces de la structure alvéolaire 130 avec, respectivement, la couche résistive 110 et la peau structurante 120.

Ces broches vont également renforcer la qualité structurelle du panneau 100 en reliant de façon directe la couche résistive 110 et la peau structurante 120 métalliques.

Elles vont également participer à la suppression des défauts d'interface entre la structure alvéolaire 130 et les peaux 120,110.

Dans une variante de réalisation illustrée sur la figure 4, ces broches de renforcement 30 s'étendent transversalement à la structure en nid d'abeille 130 et sont orientées de façon perpendiculaire par rapport aux plans de la couche résistive 110 et de la peau structurante 120 du panneau 100.

Toutefois, d'autres orientations des broches de renforcement 30 peuvent être envisagées.

Par ailleurs, ces broches de renforcement 30 sont en matériau métallique.

Elles peuvent être, également, d'un matériau similaire à celui constituant la peau structurante 120 et la couche résistive 110.

A l'étape suivante 204, on fixe chacune des broches de renforcement 30 respectivement et successivement sur la couche résistive 110 et la peau structurante 120 du panneau 100.

Cette étape de fixation 204 peut être réalisée par tout procédé de soudage ou de brasage connu, offrant l'avantage d'assurer une liaison continue entre chaque broche 30 et les peaux constitutives du panneau 100.

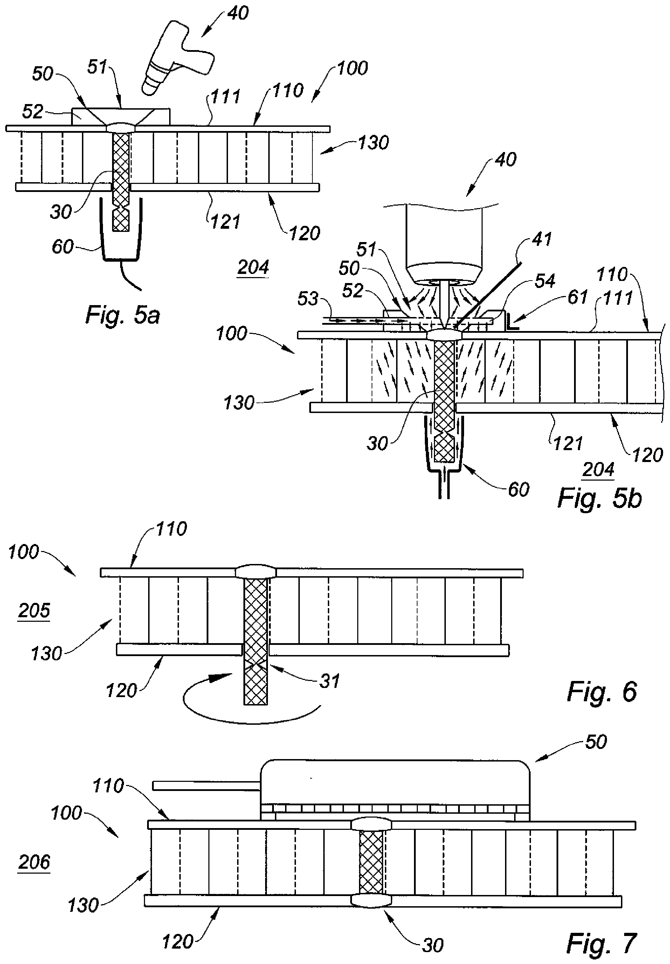

Dans une variante de réalisation illustrée sur les figures 5a et 5b, on réalise le soudage de chaque broche de renforcement 30 sur la couche résistive 110 et la peau structurante 120 du panneau 100 par un procédé de soudage à l'arc avec une électrode non fusible de type soudage TIG, le fil d'apport étant illustré par la référence 41 sur la figure 5b.

Toutefois, d'autres types de procédés de soudage peuvent être envisagés. On peut citer comme exemples non limitatifs de procédé, un soudage laser ou encore à l'arc par résistance.

Un tel procédé de soudage est bien connu de l'homme du métier et ne sera pas détaillé par la suite tout comme l'outillage utilisé de type torche de soudage 40 illustré sur les figures 5a et 5b.

On rappelle, toutefois, qu'un telle torche de soudage 40 est utilisée sous un flux gazeux, de type argon ou hélium ou un mélange des deux.

De façon avantageuse, l'étape de fixation 204 est réalisée sous atmosphère contrôlée au droit et à l'envers des surfaces soudées.

En référence aux figures 5a, 5b, 8 et 9, pour réaliser la soudure sous atmosphère contrôlée, on place un dispositif de diffusion de gaz inerte 50 de type traînard pour protection gazeuse au droit des broches 30 du côté de la face externe 111 de la couche résistive 110.

De préférence, le gaz est un gaz de protection de type Argon, Hélium ou un mélange des deux.

Ce dispositif 50 est adapté pour coopérer avec la torche de soudage 40 et permettre un soudage au droit et à l'envers des surfaces soudées.

Il est également destiné à coopérer avec une buse 60 d'injection de gaz inerte placée du coté opposé du panneau 100, à savoir sur la face externe 121 de la peau structurante 120.

Un tel dispositif de diffusion de gaz inerte 50 permet de maintenir le cordon de soudure et la zone affectée thermiquement des soudures entre chaque broche 30 et les peaux constitutives du panneau 100 sous une atmosphère inerte suffisante pour éviter notamment l'apparition de criques.

Ce dispositif 50 comprend, plus précisément, une enceinte de diffusion 52 locale équipée des moyens d'injection 53 de fluide sur le panneau traité 100.

Cette enceinte 52 concentre la diffusion de gaz dans une chambre inerte située sur les perforations 113 de la couche résistive 110 plus large que celle offerte par la buse associée à la torche de soudage 40, ceci afin d'éviter l'apparition de criques.

Cette enceinte 52 peut être souple et, ainsi, apte à s'adapter au moins en partie à la surface du panneau traitée.

L'enceinte 50 comprend un logement adapté pour recevoir la torche de soudage 40 et lui permettre de traverser l'enceinte 50, ceci afin d'approcher la torche de soudage 40 de la zone à souder.

Ce logement est formé par un orifice central 51 traversant.

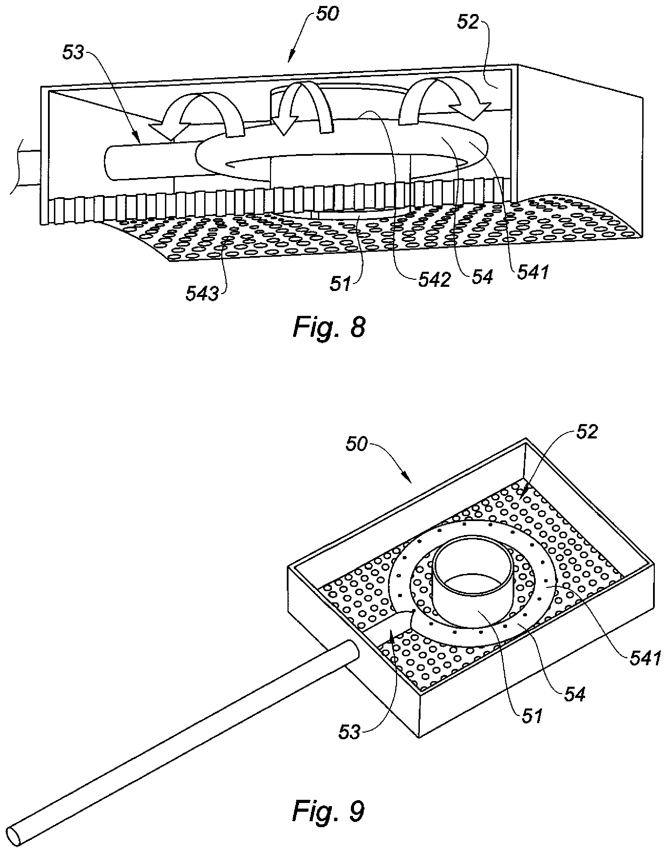

Cet orifice central peut être en forme de tube, comme sur les figures 8 et 9 ou encore en forme de cône comme sur les figures 5a et 5b. Toute forme d'orifice peut être adaptée sans sortir du cadre de la présente invention.

Les moyens d'injection 53 de gaz comprennent, quant à eux, une extrémité d'alimentation disposée à l'extérieur de l'enceinte 52 et une extrémité de distribution de gaz logée à l'intérieur de l'enceinte 52.

Ces moyens d'injection 53 comprennent, à leur extrémité de distribution, un diffuseur 54 logé à l'intérieur de l'enceinte 52, c'est-à-dire un élément destiné à disperser et répandre au travers de l'enceinte 52 le flux unidirectionnel de gaz entrant.

Avantageusement, ce diffuseur 54 est un diffuseur monté sur la périphérie du logement de la torche de soudage 40, configuré pour assurer une arrivée non turbulente du gaz, c'est-à-dire une diffusion laminaire de ce dernier, sur le cordon de soudure de chaque broche 30 et les peaux constitutives du panneau 100 correspondantes.

Le terme « monter à la périphérie » signifie, notamment, que le diffuseur 54 s'étend au moins sur une partie du pourtour des parois de l'orifice central 51 formant logement de la torche de soudage 40 ou sur tout ledit pourtour, comme illustré notamment sur les figures 8 et 9.

Il peut être monté sur la périphérie externe ou interne dudit orifice 51.

Ainsi, un tel dispositif 50 permet de s'affranchir des trainards existants dont les moyens d'injection de gaz sont mis en œuvre nécessairement en arrière de la torche de soudage pour assurer une telle diffusion laminaire du gaz.

Avantageusement, le diffuseur 54 est adapté pour diffuser le gaz de façon indirect sur les pièces à souder.

Ce diffuseur comprend un anneau 541 monté de façon coaxial avec l'orifice central 51 recevant la torche de soudage 40, cet anneau 541 comprend des orifices de sortie 542 de gaz sur sa périphérie dirigés vers la concavité de l'enceinte, à l'opposé des pièces à souder.

Avec de tels orifices 542, la diffusion de gaz inerte n'est pas dirigée vers les orifices de la peau du panneau 100 mais à l'opposé, permettant une diffusion laminaire du gaz dans l'enceinte 50.

Pour refermer l'enceinte 50, le dispositif comprend une grille 543 formée de nid d'abeille à orifices traversant placée en regard des pièces à souder, ceci afin de réaliser la soudure au travers du dispositif.

Concernant la buse 60 d'injection de gaz inerte placée du coté de la peau structurante 120, elle est également adaptée pour agir par pression sur les broches de renforcement 30 lors de leur fixation sur la couche résistive 110.

Ainsi, comme illustré sur la figure 5b par des flèches, un gaz inerte circule de part et d'autre de la soudure mais également dans la structure alvéolaire 130, sur les faces internes et externes de la couche résistive 110 et de la peau structurante 120, limitant ainsi avantageusement toute apparition de criques de soudure ou de brasure.

L'atmosphère dans laquelle a lieu le soudage est contrôlée et des problèmes liés à la contamination du panneau 100 réparé peuvent être résolus.

Ceci offre l'avantage de contrôler l'atmosphère dans laquelle a lieu le soudage et d'éviter efficacement comme précédemment évoqué, toute contamination du panneau, de type oxydation, ou toute apparition de criques.

Par ailleurs, des moyens d'étanchéité 61 peuvent être disposés sur la circonférence de l'enceinte 52, ceci afin de garantir une certaine herméticité de l'enceinte 11.

De préférence, ce sont des joints d'étanchéité formés de produits disponibles sur le marché.

On peut également utiliser un scotch haute température ou de l'aluminium pour améliorer localement l'étanchéité.

Dans une étape ultérieure 205 illustrée sur la figure 6, lorsque la broche de renforcement 30 est soudée à la couche résistive 110, on exerce un couple sur ladite broche 30, ceci afin qu'elle se rompe à une extrémité correspondante à la peau structurante 120.

Pour faciliter cette rupture, chaque broche de renforcement 30 comprend un rétrécissement 31 à une longueur de la broche 30 correspondante à celle de l'épaisseur du panneau 100 de sorte qu'une fois la partie de la broche 30 rompue, l'extrémité de la broche 30 vienne en regard la peau structurante 120 dans la perforation 123 réalisée.

La broche de renforcement 30 ayant des dimensions maintenant adaptés à celles du panneau 100, on fixe, dans une étape ultérieure 206, la broche 30 avec la peau structurante 120 du panneau 100 par un procédé de soudage similaire à l'étape de soudage 204 précédente sous atmosphère protectrice grâce à la mise en place du dispositif 50 de diffusion de gaz disposé sur la couche résistive 110 du panneau, comme illustré sur la figure 7.

Le procédé 200 de réparation d'un panneau d'atténuation acoustique 100 selon la présente invention peut se terminer par une étape 207 dans laquelle on arase les soudures sur les faces externes 111,121 de la couche résistive 110 et de la peau structurante 120.

## Revendications

1. Dispositif de protection gazeuse (50) adapté pour être mis en œuvre lors d'une étape de soudage sous atmosphère contrôlée d'un panneau d'atténuation acoustique (100), ce dispositif (50) comprenant une enceinte de diffusion (52) comportant des moyens d'injection (53) de gaz inerte pour injecter ledit gaz dans l'enceinte (52) et un logement formé par un orifice (51) pour recevoir une torche de soudage (40) au travers de l'enceinte (52), les moyens d'injection (53) de gaz inerte comprennent un diffuseur (54) de gaz inerte comprenant un anneau (541) monté à la périphérie de, et de façon coaxiale avec, ledit logement de la torche de soudage (40), **caractérisé en ce qu'**il comprend en outre une grille (543) refermant l'enceinte (52), cette grille (543) étant formée de nid d'abeille à orifices traversant et étant agencée pour être placée en regard des surfaces du panneau (100) à souder, et **en ce que** l'anneau (541) du diffuseur (54) de gaz inerte comprend des orifices de sortie (542) de gaz sur sa périphérie dirigés vers la concavité de l'enceinte (52) à l'opposé du panneau d'atténuation acoustique (100).

2. Dispositif selon la revendication 1 **caractérisé en ce qu'**il est adapté pour coopérer avec la torche de soudage (40) et permettre un soudage au droit et à l'envers des surfaces à souder du panneau (100).

3. Dispositif selon la revendication 1 ou 2, **caractérisé en ce que** le diffuseur (54) est configuré pour assurer une arrivée non turbulente du gaz sur les surfaces à souder du panneau (100).

4. Dispositif selon la revendication 3, **caractérisé en ce que** le diffuseur (54) est adapté pour diffuser le gaz de façon indirect sur les surfaces à souder, l'anneau (541) du diffuseur (54) comprenant des orifices (542) de sortie du gaz sur sa périphérie dirigés vers la concavité de l'enceinte.

## Patentansprüche

1. Gasschutzvorrichtung (50), die angepasst ist, um bei einem Schritt des Schweißens einer Schalldämmplatte (100) unter kontrollierter Atmosphäre angewendet zu werden, wobei diese Vorrichtung (50) eine Diffusionsumwandung (52) umfasst, die Injektionsmittel (53) für Inertgas, um das Gas in die Umwandung (52) zu injizieren, und eine Aufnahme beinhaltet, die von einer Öffnung (51) gebildet wird, um einen Schweißbrenner (40) durch die Umwandung (52) aufzunehmen, wobei die Injektionsmittel (53) für Inertgas einen Diffusor (54) für Inertgas umfassen, der einen Ring (541) umfasst, der umlaufend um die und koaxial mit der Aufnahme des Schweißbrenners (40) angebracht ist, **dadurch gekennzeichnet, dass** sie weiter ein Gitter (543) umfasst, das die Umwandung (52) verschließt, wobei dieses Gitter (543) von einer Wabe mit Durchgangsöffnungen gebildet wird und angeordnet ist, um gegenüber den zu schweißenden Oberflächen der Platte (100) platziert zu werden, und dadurch, dass der Ring (541) des Diffusors (54) für Inertgas umlaufend Austrittsöffnungen (542) für Gas umfasst, die zu der Konkavität der Umwandung (52), der Schalldämmplatte (100) entgegengesetzt, gerichtet sind.

2. Vorrichtung nach Anspruch 1, **dadurch gekennzeichnet, dass** sie angepasst ist, um mit dem Schweißbrenner (40) zusammenzuwirken und ein Schweißen seitens und auf der Rückseite der zu schweißenden Oberflächen der Platte (100) zu ermöglichen.

3. Vorrichtung nach Anspruch 1 oder 2, **dadurch gekennzeichnet, dass** der Diffusor (54) ausgestaltet ist, ein nicht-turbulentes Ankommen des Gases auf den zu schweißenden Oberflächen der Platte (100) zu gewährleisten.

4. Vorrichtung nach Anspruch 3, **dadurch gekennzeichnet, dass** der Diffusor (54) angepasst ist, um das Gas indirekt auf den zu schweißenden Oberflächen zu verbreiten, wobei der Ring (541) des Diffusors (54) umlaufend Austrittsöffnungen (542) für das Gas umfasst, die zu der Konkavität der Umwandung gerichtet sind.

## Claims

1. A gas shielding device (50) adapted to be implemented during a step of welding in a controlled atmosphere of an acoustic attenuation panel (100), this device (50) comprising a diffusion enclosure (52) including inert gas injection means (53) for injecting said gas into the enclosure (52) and a housing formed by an orifice (51) for receiving a welding torch (40) throughout the enclosure (52), the inert gas injection means (53) comprise an inert gas diffuser (54) comprising a ring (541) mounted at the periphery of, and coaxially with, said housing of the welding torch (40), **characterized in that** it further comprises a grid (543) closing the enclosure (52), this grid (543) being honeycomb-shaped with through orifices and being arranged to be placed facing the surfaces of the panel (100) to be welded, and **in that** the ring (541) of the inert gas diffuser (54) comprises gas outlet orifices (542) over its periphery directed towards the concavity of the enclosure (52) opposite to the acoustic attenuation panel (100).

2. The device according to claim 1, **characterized in that** it is adapted to cooperate with the welding torch (40) and to enable a welding perpendicular to and on the underside of the surfaces to be welded of the panel (100).

3. The device according to claim 1 or 2, **characterized in that** the diffuser (54) is configured to ensure a non-turbulent inlet of the gas on the surfaces to be welded of the panel (100).

4. The device according to claim 3, **characterized in that** the diffuser (54) is adapted to indirectly diffuse the gas on the surfaces to be welded, the ring (541) of the diffuser (54) comprising gas outlet orifices (542) over its periphery directed towards the concavity of the enclosure.
